# EUROPÄISCHE PATENTSCHRIFT

(11) **EP 3 409 433 B1**
(45) Veröffentlichungstag und Bekanntmachung des Hinweises auf die Patenterteilung: **03.07.2024**
(21) Anmeldenummer: 18172961.7
(22) Anmeldetag: 17.05.2018
(51) Int. Cl.: B26D 7/32, B26D 5/00, B26D 7/30, B65B 25/06, B65B 57/14

(54) **VERFAHREN ZUM VERARBEITEN VON LEBENSMITTELPRODUKTEN UND LEBENSMITTELVERARBEITUNGSSYSTEM MIT POSITIONSNACHVERFOLGUNG**
METHOD FOR PROCESSING OF FOOD PRODUCTS AND FOOD PROCESSING SYSTEM WITH POSITION TRACKING
PROCÉDÉ DE TRAITEMENT DE DENRÉES ALIMENTAIRES ET SYSTÈME DE TRAITEMENT DE DENRÉES ALIMENTAIRE À SUIVI DE POSITION

(30) Priorität: 01.06.2017 DE 102017112137
(43) Veröffentlichungstag der Anmeldung: 05.12.2018
(73) Patentinhaber: Weber Food Technology GmbH, 35236 Breidenbach (DE)
(72) Erfinder: SCHAUB, Joachim, 35116 Reddighausen (DE); HALLENBERGER, Udo, 35117 Oberasphe (DE); ECKHARDT, Christoph, 35236 Breidenbach (DE)
(74) Vertreter: Grünecker Patent- und Rechtsanwälte PartG mbB

(56) Entgegenhaltungen:
- EP-A1- 2 420 460
- EP-A1- 2 679 356
- EP-A2- 1 982 806
- WO-A1-2016/150641
- DE-A1-102010 053 872
- DE-A1-102014 118 978

## Beschreibung

Die vorliegende Erfindung betrifft ein Verfahren zum Verarbeiten von Lebensmittelprodukten gemäß dem Oberbegriff von Anspruch 1 und ein Lebensmittelverarbeitungssystem gemäß dem Oberbegriff von Anspruch 9.

Im Stand der Technik sind Lebensmittelverarbeitungssysteme bekannt, in denen Lebensmittelaufschneidesysteme, insbesondere Slicer mit drehendem Sichelmesser oder planetarisch umlaufendem Kreismesser, mit vor- und nachgeordneten Systemen, wie Röntgenscannern, Waagen, Fördermitteln und Verpackungsmaschinen kombiniert werden.

Bereits geringe Portionsfehlgewichte können bei der Produktion von Lebensmittelprodukten wirtschaftlich nachteilig sein. Übersteigt das Portionsgewicht den vorgegebenen Gewichtswert für eine bestimmte Verpackungseinheit, so wird ein sogenannter Give-Away erzeugt, der der Rentabilität abträglich ist. Wird hingegen das vorgegebene Gewicht um einen bestimmten Wert unterschritten, so liegen die erzeugten Portionen nicht mehr innerhalb des gesetzlichen Rahmens, und können folglich nicht verkauft werden.

Deswegen werden Vorkehrungen getroffen, um die Genauigkeit des Gewichts der erzeugten Lebensmittelportionen zu optimieren.

Aus der EP 1 982 806 B1 ist es bekannt, sowohl ein Untergewichtssignal als auch ein Signal einer Endkontrollwaage für die Regelung eines einspurigen Slicers heranzuziehen.

Die EP 2 679 356 A1 offenbart, dass unvollständige, d.h. untergewichtige, Portionen durch einen Sensor, beispielsweise eine Mehrspurwaage, erkannt und daraufhin aus einem Hauptförderer ausgeschleust werden und einer Korrekturstation zugeführt werden.

Weiterhin wird im Stand der Technik das Ziel verfolgt, den Durchsatz von Lebensmittelverarbeitungssystemen zu erhöhen. Es ist bekannt, mit mehreren Slicern parallel Lebensmittelprodukte aufzuschneiden, wobei die Scheiben von verschiedenen Spuren zu Portionen kombiniert werden, und diese Portionen über eine Endkontrollwaage laufen, mittels deren Signal die Scheibendicke in einem der Slicer angepasst wird.

Weiterhin ist ein Lebensmittelverarbeitungssystem bekannt, bei dem die Regelung von mehreren Slicern beim parallelen Aufschneiden auf Basis der an einer gemeinsamen Endkontrollwaage bestimmten Portionsgewichtswerte angepasst wird. Dadurch sind der Optimierung der Portionsgewichte aber gewisse Grenzen gesetzt, da alle Slicer auf Basis eines gemeinsamen Signals geregelt werden.

Es ist somit die Aufgabe der vorliegenden Erfindung ein Verfahren zum Verarbeiten von Lebensmittelprodukten und ein Lebensmittelverarbeitungssystem bereitzustellen, mit denen nicht nur eine Erhöhung des Durchsatzes bzw. der Produktivität erreicht werden kann, sondern auch eine Verbesserung der Genauigkeit des Portionsgewichts der erzeugten Lebensmittelportionen.

Die vorliegende Erfindung stellt deswegen ein Verfahren zum Verarbeiten von Lebensmittelprodukten bereit, wobei Lebensmittelprodukte zu einzelnen Lebensmittelportionen in mehreren Produktionsspuren mehrspurig aufgeschnitten werden, zumindest ein Merkmal einer Lebensmittelportion während und/oder nach dem Aufschneiden erfasst wird, die Lebensmittelportionen auf separaten Produktionspuren mehrspurig gefördert werden, und die Lebensmittelportionen von mehreren Spuren auf eine reduzierte Anzahl von Ausgangsspuren verlagert werden, und dabei insbesondere zwischen wechselnden Spuren verlagert werden und/oder gruppiert werden. Erfindungsgemäß erfolgt ein Nachverfolgen der Position der einzelnen Lebensmittelportionen mittels einer Steuerung, sodass für jede auf die Ausgangsspur verlagerte Lebensmittelportion bekannt ist, in welcher Produktionsspur sie erzeugt wurde. Somit ist eine Rückverfolgbarkeit der Lebensmittelportionen gewährleistet, sodass bei Bedarf eine Anpassung des Arbeitsverhaltens, bzw. Einstellung der Regelung, in der Produktionsspur, in der die Lebensmittelportionen bearbeitet wurden, erfolgen kann. Dadurch kann eine gezielte Optimierung des Verfahrens erreicht werden.

Vorteilhafterweise kann zu jeder Lebensmittelportion ein Datensatz in einem Datenspeicher der Steuerung hinterlegt werden, wobei in dem Datensatz die Produktionsspur identifiziert ist, in der die Lebensmittelportion erzeugt wurde. Weiterhin kann in dem Datensatz das Lebensmittelprodukt identifiziert werden, das für die Lebensmittelportion aufgeschnitten wurde.

Bei einer Lebensmittelportion handelt es sich insbesondere um eine Gruppe von Lebensmittelscheiben, die von einem oder mehreren Lebensmittelprodukten abgeschnitten wurden, insbesondere um Gruppen von Wurst-, Käse- und/oder Schinkenscheiben.

Die Lebensmittelscheiben einer Lebensmittelportion können gestapelt, geschindelt oder nebeneinander angeordnet sein. Die Lebensmittelportion kann lediglich aus den Lebensmittelscheiben bestehen, aber auch ein Unterlegpapier oder eine Unterlegfolie oder Zwischenlegpapiere oder -folien aufweisen. Soweit die Lebensmittelscheiben in einer Verpackung angeordnet sind, kann auch diese als Teil der Lebensmittelportion angesehen werden.

Die Produktionsspur kann Bearbeitungs-, Handhabungs- und/oder Analysevorrichtungen umfassen, durch die die Lebensmittelportionen jeweils gefördert werden. Insbesondere umfasst die Produktionsspur wenigstens eine Spur einer Lebensmittelaufschneidevorrichtung, eines Portionierers, einer spurbezogenen Waage, einer Ausschleusevorrichtung, einer Formatvervollständigungsvorrichtung, eines Portionsausrichters, einer Einschleusevorrichtung, einer Portionskontrollanzeige, eines Übergangsfördermittels, einer Verpackungsmaschine und/oder eines Einlegers bzw. Einlegebandes. Die vorgenannten Vorrichtungen können jeweils Fördermittel oder wenigstens teilweise gemeinsame Fördermittel umfassen. Als Fördermittel können insbesondere Förderbänder, Förderriemen, Förderrollen oder Einzelförderer, wie z.B. Transportmover, eingesetzt werden.

Die reduzierte Anzahl von Ausgangsspuren umfasst wenigstens eine Ausgangsspur und insbesondere nur eine Ausgangsspur.

Vorteilhafterweise umfasst das Verfahren die Überwachung der einzelnen Lebensmittelportionen mittels Überwachungsmitteln, sodass für jede auf die Ausgangsspur verlagerte Lebensmittelportion mindestens ein charakteristisches Merkmal der Lebensmittelportion bekannt ist, und/oder welche Veränderungen an der Lebensmittelportion vorgenommen wurden. Die Überwachung kann durch Sensoren oder durch die Auswertung der Ansteuerung von Aktuatoren erfolgen. Beispielsweise kann ein Sensor in Form einer Kamera, einer Waage oder eines Scanners vorgesehen sein, mit dem Eigenschaften der Lebensmittelportionen erfasst werden können.

Die Eigenschaften der Lebensmittelportion umfassen deren Gewicht, Aussehen, aber auch deren Positionsmerkmale, wie die Positionierung der Scheiben in der Portion zueinander und/oder der Portion in einer Verpackung oder auf einem Träger.

Weiterhin kann die Auswertung der Ansteuerung der Aktuatoren, wie z.B. eines Fördermittels oder eines Roboter, eine Nachverfolgbarkeit der Lebensmittelportion ermöglichen.

Das Aufschneiden der Lebensmittelprodukte erfolgt insbesondere in einem Lebensmittelaufschneidesystem, insbesondere einem mehrspurigen Slicer mit einem oder mehreren drehenden Sichelmessern oder planetarisch umlaufenden Kreismessern, oder mehreren einspurigen Slicern mit einem drehendem Sichelmesser oder planetarisch umlaufendem Kreismesser.

In einer Ausführungsform umfasst das Verfahren den weiteren Schritt des Messens des Gewichts jeder Lebensmittelportion auf der Ausgangsspur mit einer Endkontrollwaage, und Zuordnung des auf der Endkontrollwaage gemessenen Gewichts zu der jeweiligen Produktionsspur, auf der die Lebensmittelportion aufgeschnitten wurde.

Es ist somit möglich, die ermittelten Einzelgewichte und/oder die statistischen Gewichtswerte, wie etwa Mittelwerte oder Standardabweichungen, den einzelnen Spuren des mehrspurigen Aufschneidens zuzuordnen.

Durch statistische Auswertung der Gewichte der einzelnen Lebensmittelportionen, etwa dem Mittelwert einer bestimmten Losgröße, insbesondere von mehr als 50, mehr als 100 oder mehr als 1000 Portionen, kann ein aussagekräftiger Wert bezüglich der Genauigkeit und Abweichungen der Portionsgewichte berechnet werden.

Ausgehend davon kann der Betrieb des Lebensmittelverarbeitungsverfahrens angepasst werden, um den Anteil an untergewichtigen und übergewichtigen Lebensmittelportionen zu reduzieren, und Lebensmittelportionen möglichst nah am Nenngewicht zu erzeugen.

Insbesondere werden die Lebensmittelportionen verpackt, bevor ihr Gewicht durch die Endkontrollwaage bestimmt wird. Die Endkontrollwaage ermittelt das Gewicht der fertig verpackten Portion im Rahmen einer abschließenden Kontrolle. Dafür kann eine sogenannte FPV-Waage eingesetzt werden, d.h. eine Waage, die die Lebensmittelportionen im Rahmen der gesetzlichen Vorgaben der Fertigpackungsverordnung (FPV) überprüft.

Das Verpacken der Lebensmittelportionen kann in den Produktionsspuren erfolgen, oder aber erst in der Ausgangsspur vor der Endkontrollwaage, das heißt nach der Übergabevorrichtung.

Insbesondere können die Lebensmittelportionen mehrspurig verpackt werden. Dabei werden mehrere Lebensmittelportionen nebeneinander in Verpackungen gefördert, die dann verschlossen werden. Insbesondere erfolgt das Verpacken parallel auf zwei, drei, vier, fünf, sechs, oder mehr als sechs Spuren.

Die verpackten Lebensmittelportionen werden dann von den mehreren Verpackungsspuren auf eine reduzierte Anzahl von Ausgangsspuren verlagert, vorteilhafterweise eine oder zwei Ausgangsspuren, die jeweils eine Endkontrollwaage aufweisen.

Insbesondere kann die Verlagerung der Lebensmittelportionen von mehreren Produktionsspuren auf eine reduzierte Anzahl von Ausgangsspuren gesteuert erfolgen. Dadurch kann die gesteuerte Reihenfolge der Zuführung der Lebensmittelportionen aus den mehreren Produktionsspuren auf die wenigstens eine Ausgangsspur vorgegeben werden. Die Steuerinformation kann dazu verwendet werden, die Position der Lebensmittelportionen nachzuverfolgen.

Vorteilhafterweise erfolgt eine separate Regelung des Aufschneidens in den Produktionsspuren, insbesondere durch Anpassen der Scheibendicke beim Aufschneiden, auf Basis des gemessenen Gewichts der Lebensmittelportionen der jeweiligen Produktionsspuren oder davon abgeleiteten Größen. Somit können bei ermittelten Gewichtsabweichungen die betreffenden Produktionsspuren gezielt in ihrem Betrieb korrigiert werden.

Die Regelung des Aufschneidens in den Produktionsspuren erfolgt vorteilhafterweise dadurch, dass das Ist-Gewicht ausgehend von einem das Soll-Gewicht übersteigenden Gewichtswert dem Soll-Gewicht von oben angenähert wird. Dabei wird sichergestellt, dass das Soll-Gewicht oder ein leicht darunterliegender Gewichtsgrenzwert nicht unterschritten wird.

In einer Ausführungsform wird ein spurbezogener Mittelwert des Gewichts über eine bestimmte Anzahl von Lebensmittelportionen, insbesondere aus einer Produktionsspur, gebildet. Durch das Nachverfolgen der Position der einzelnen Lebensmittelportionen kann der auf der wenigstens einen Ausgangsspur durch die Endkontrollwaage bestimmte Gewichtswert jeweils einer der Produktionsspuren zugeordnet werden. Aus den einer Produktionspur zugeordneten Gewichtswerten kann dann ein spurbezogener Mittelwert, vorteilhafterweise über eine bestimmte Losgröße von mehr als 10, mehr als 100, mehr als 500 oder mehr als 1000 Lebensmittelportionen, gebildet werden. Ist dieser Mittelwert über einem gewünschten Sollwert, so kann das jeweilige Aufschneiden in der jeweiligen Produktionsspur so angepasst werden, damit der Sollwert genauer erreicht wird.

Vorteilhafterweise werden die Lebensmittelportionen im Rahmen des mehrspurigen Förderns auf separaten Spuren mit jeweils spurbezogenen Waagen gewogen. Insbesondere werden die Lebensmittelportionen in den einzelnen Produktionsspuren über jeweils eine spurbezogene Waage gefördert. Dabei handelt es sich vorteilhafterweise um Durchlaufkontrollwagen, die dem Lebensmittelaufschneidesystem nachgeordnet sind. Auch die dabei bestimmten Gewichtsinformationen können für die Regelung des mehrspurigen Aufschneidens jeweils spurbezogenen zurückgeführt werden. Vorteilhafterweise wird der mit der spurbezogenen Waage ermittelte Gewichtswert einer Lebensmittelportion mit dem Gewichtswert derselben Lebensmittelportion auf der Endkontrollwaage verglichen. Dies wird durch das Nachverfolgen der Lebensmittelportion durch die Steuerung ermöglicht. Damit kann ermittelt werden, ob das Gewicht einer Lebensmittelportion verändert wurde, durch Gewichtskorrektur, oder festgestellt werden, wenn eine Fehlfunktion einer der spurbezogenen Waagen oder der Endkontrollwaage, ein fehlerhafter Portionstransport oder eine unzulässige Manipulation vorliegt.

Die Nachverfolgung der einzelnen Lebensmittelportionen von der Endkontrollwaage zurück zu den Produktionsspuren, ermöglicht insbesondere, dass ein Abgleich zwischen den spurbezogenen Durchlaufkontrollwaagen und der wenigstens einen Endkontrollwaage erfolgen kann. Insbesondere kann dadurch eine Fehlfunktion einer der Waagen erkannt werden. Weiterhin kann dadurch der Tara-Anteil der Verpackung ermittelt werden, d.h. das Gewicht der Verpackung und ggf. von Zwischenfolien bzw. -papieren, gegenüber der darin enthaltenen Lebensmittelportion.

Bei Abweichungen vom Soll-Gewicht kann dann umgehend das Gewicht der Portion korrigiert werden, indem die Einzelscheiben dünner oder dicker geschnitten werden oder die Anzahl von Scheiben pro Portion verändert werden. Wenn nun noch zusätzlich das Gewicht der Lebensmittelportionen auf der Ausgangsspur mit einer Endkontrollwaage erfasst und spurbezogenen zurückgeführt wird, kann diese Regelung noch erheblich genauer gestaltet werden.

Damit kann gezielt in jeder Produktionsspur ein optimaler Gewichtswert erreicht werden. Dies wird vornehmlich durch die Rückverfolgbarkeit der Lebensmittelportionen auf der Ausgangsspur zu den Produktionsspuren ermöglicht.

In einer Ausführungsform werden die Lebensmittelportionen im Rahmen des mehrspurigen Förderns in einem Formatsatz zueinander angeordnet, wobei dabei Lebensmittelportionen zwischen den Produktionsspuren querverlagert werden, wobei die Steuerung die Querverlagerung nachverfolgt. Somit ist das Nachverfolgen der Position der einzelnen Lebensmittelportionen trotz dieser Querverlagerung gewährleistet.

Insbesondere kann die Querverlagerung durch einen Picker-Roboter erfolgen. Bei einem Picker-Roboter handelt es sich vorteilhafterweise um einen Delta-Roboter oder Portal-Roboter mit dem wenigstens eine Lebensmittelportion ergriffen, verlagert und wieder abgelegt werden kann. Die Verlagerung erfolgt dabei wenigstens in einer Richtung, die von der Richtung der Produktionsspuren abweicht.

In einer vorteilhaften Ausführungsform wird wenigstens eine fehlgewichtige Lebensmittelportion im Rahmen des mehrspurigen Förderns durch Ergänzung bzw. Entnahme von Lebensmittelscheiben gewichtskorrigiert, wobei jeweils portionsbezogen in einem Datenspeicher gespeichert wird, wenn eine Gewichtskorrektur für eine Lebensmittelportion durchgeführt wird. Dies kann ermöglichen, dass die gewichtskorrigierten Lebensmittelportionen nicht in die Auswertung oder Regelung des mehrspurigen Aufschneidens einbezogen werden. Gegebenenfalls können die gewichtskorrigierten Lebensmittelportionen einer separaten Auswertung zugeführt werden. Wenn statistisch erfasst wird, dass durch eine der Produktionsspuren vermehrt Gewichtskorrekturen erforderlich werden, kann ein entsprechender Hinweis ausgegeben werden, entweder an einen Bediener oder an eine Fehlerüberprüfungsroutine in der Steuerung.

Andernfalls würde die wenigstens eine gewichtskorrigierte Lebensmittelportion die spurbezogenen Gewichtswerte verfälschen, was zu Fehlern in der Regelung oder statistischen Auswertung führen würde. Insbesondere kann die Ergänzung bzw. Entnahme von Lebensmittelscheiben als Störgröße im Regelkreis gesehen werden, die durch die vorangehende Lehre aber eliminiert werden kann.

In einer Ausführungsform kann die Position von gewichtskorrigierten Lebensmittelportionen ebenfalls bis zur Ausgangspur nachverfolgt werden. Das gemessene Gewicht der gewichtskorrigierten Lebensmittelportion kann dann ebenfalls einer statistischen Auswertung zugeführt werden.

Die Gewichtskorrektur erfolgt insbesondere durch eine Portionskontrollanzeige, die für jede Lebensmittelportion anzeigt, ob eine manuelle Ergänzung oder Entnahme von Scheiben vorzunehmen ist. Dafür kann das aktuelle Gewicht der jeweilig erzeugten Lebensmittelportionen nach dem mehrspurigen Aufschneiden ermittelt und gespeichert werden. Im Rahmen des mehrspurigen Förderns kann dann jeweils angezeigt werden, wie die Lebensmittelportionen zu korrigieren sind.

Die Gewichtskorrektur der einzelnen Lebensmittelportionen kann während des mehrspurigen Förderns auf den separaten Produktionsspuren erfolgen. Dabei können die Lebensmittelportionen noch auf einem Fördermittel der Produktionsspur aufliegen, oder bereits in einer noch offenen Verpackung eingelegt sein.

Dafür wird die Position der Lebensmittelportionen auf den Produktionsspuren verfolgt, sodass diese in der Steuerung bekannt ist. Dann kann einem Bediener für die sich auf den Produktionsspur befindlichen Lebensmittelportionen angezeigt werden, ob und wie diese korrigiert werden müssen. Der Bediener legt dann entsprechend Scheiben nach oder entfernt Scheiben. In einer alternativen Ausführungsform kann das Hinzufügen oder Entfernen von einzelnen Scheiben aber auch automatisch erfolgen, beispielsweise durch einen Roboter oder einen Einleger.

Die gewichtskorrigierten Lebensmittelportionen weisen allerdings meist ein Portionsgewicht auf, das deutlich höher ist als das Soll-Gewicht, sodass sie die Auswertung an der Endkontrollwaage verfälschen würden.

Bei Berücksichtigung der korrigierten Lebensmittelportionen würde der gemessene Mittelwert des Portionsgewichts einen höheren Wert aufweisen, als der tatsächliche Mittelwert des Gewichts der von dem Lebensmittelaufschneidesystem erzeugten Lebensmittelportionen. Somit würde die Regelung von einem zu hohen durchschnittlichen Portionsgewicht ausgehen, was zu einer Regelung hin zu dünneren Scheiben führen würde, wodurch wiederum bei mehr Lebensmittelportionen Scheiben nachgelegt werden müssten. Insgesamt würde dies also zu einem instabilen Regelkreis des Portionsgewichtes führen.

Mit der erfindungsgemäßen Nachverfolgung der einzelnen Lebensmittelportionen kann gewährleistet werden, dass gewichtskorrigierte Lebensmittelportion oder andere deutlich unter- oder übergewichtige Lebensmittelportionen bis zur Endkontrollwaage verfolgt werden und dort nicht in der Auswertung berücksichtigt werden, sondern insbesondere aus der Statistik zur Mittelwertermittlung herausgenommen werden.

Vorteilhafterweise wird die Veränderung einer fehlgewichtigen Lebensmittelportion bei der Gewichtskorrektur sensorisch erfasst. Insbesondere kann die sensorische Erfassung durch eine optische Überwachung oder durch einen Waage erfolgen. Die sensorische Erfassung kann durch Vergleich des mit der spurbezogenen Waage erfassten Gewichts der fehlgewichtigen Lebensmittelportion und des mit der Endkontrollwaage erfassten Gewichts dieser Lebensmittelportion nach der Gewichtskorrektur erfolgen, insbesondere durch Subtraktion dieser Werte. Das Ergebnis dieser Subtraktion ist, abzüglich des Tara-Anteils der Verpackung, die Änderung des Gewichts bei der Gewichtskorrektur. Die Veränderungserfassung ermöglicht, dass festgestellt werden kann, ob bei einer Lebensmittelportion tatsächlich eine Gewichtskorrektur durchgeführt wurde, und wie die Lebensmittelportion dabei verändert wurde. Zudem kann das Gewicht der jeweiligen Gewichtskorrektur von dem mit der Endkontrollwaage erfassten Gewichtswert der Lebensmittelportion abgezogen werden, um die entsprechend bereinigten Gewichtswerte für eine vorteilhafte statistische Auswertung bzw. Regelung des Aufschneidens zu verwenden.

Das Ausgangsgewicht und/oder die Gewichtsveränderung bei der Korrektur der fehlgewichtigen Lebensmittelportion kann den Daten dieser Lebensmittelportion zugeordnet und gespeichert werden. Mit dieser Information kann das durch die Endkontrollwaage gemessene Gewicht der Lebensmittelportion auf das ursprüngliche Gewicht der Lebensmittelportion zurückgeführt werden. Das ursprüngliche Gewicht der gewichtskorrigierten Lebensmittelportion kann dann der jeweiligen Produktionsspur zugeordnet werden, ohne dass eine Verfälschung der Auswertung oder Regelung stattfindet.

Weiterhin können auch andere Veränderungen erfasst werden, wie z.B. Lagekorrekturen der Lebensmittelportionen als Ganzes oder von deren Scheiben zueinander. Die Veränderung der Lebensmittelportionen wird durch sensorische, insbesondere optische, Mittel erfasst und vorteilhafterweise den Daten bezüglich der jeweiligen Lebensmittelportion zugeordnet und gespeichert. Damit ist es möglich, die nachträglich veränderten Lebensmittelportionen gesondert einer statistischen Auswertung zuzuführen.

In einer Ausführungsform werden die Lebensmittelportionen im Rahmen des mehrspurigen Förderns verpackt und dafür optional in Förderrichtung ausgerichtet. Dies ermöglicht, dass die Lebensmittelportionen bezüglich des Formatsatzes einer Verpackungsmaschine ausgerichtet sind. Dafür werden die Lebensmittelportionen insbesondere in Förderrichtung in Abstände voneinander gebracht, die dem Abstand der Leerverpackungen entsprechen. Die Leerverpackungen sind insbesondere die Verpackungsunterschalen einer Tiefziehverpackungsmaschine.

Vorteilhafterweise können die Positionen der Lebensmittelportionen sensorisch erfasst werden, insbesondere optisch mittels wenigstens einer Kamera oder wenigstens einer Lichtschranke, und insbesondere beim Verlagern der Lebensmittelportionen. Die Positionserfassung ermöglicht das Nachverfolgen der jeweiligen Positionen der Lebensmittelportionen. Insbesondere können mehrere Kameras oder Lichtschranken sequentiell vorgesehen sein, die jeweils die Positionen der Lebensmittelportionen in einem Bereich der Produktionsspuren überwachen.

Beim Einsatz einer Kamera als Sensor zum Nachverfolgen der Lebensmittelportionen kann insbesondere Bildbearbeitungssoftware zum Einsatz kommen, die ein Tracking der Lebensmittelportionen ermöglicht. Insbesondere kann der Bereich durch eine Kamera überwacht werden, in dem die Lebensmittelportionen zwischen Spuren verlagert werden, insbesondere der Bereich in dem die Lebensmittelportionen von den mehreren parallelen Produktionsspuren auf die reduzierte Anzahl von Ausgangsspuren verlagert werden. Damit kann bestimmt werden, welche der Lebensmittelportionen auf der Ausgangsspur von welcher Produktionsspur stammen.

In einer weiteren Ausführungsform kann ein auf eine Lebensmittelportion oder deren Verpackung projiziertes Lichtsignal mit dieser mitgeführt werden, wobei die Lebensmittelportion anhand des Lichtsignals identifizierbar ist. Das Lichtsignal kann insbesondere ein Lichtzeichen zur Identifizierung der Lebensmittelportion bzw. der Verpackung sein und/oder Information zu wenigstens einer Eigenschaft der Lebensmittelportion oder deren Verpackung bereitstellen.

Das Lichtsignal kann insbesondere dazu dienen, eine manuelle Bearbeitung der Lebensmittelportionen, beispielsweise das Nachlegen oder Entnehmen von Scheiben, anzufordern. In manchen Ausführungsformen kann das Lichtsignal aber auch durch einen Sensor, insbesondere eine Kamera, erfasst werden. Damit kann innerhalb des Systems kommuniziert werden, dass eine Lebensmittelportion bestimmte Eigenschaften hat, beispielsweise manuell ergänzt wurde.

Insbesondere ermöglicht das Lichtsignal eine Zuordnung der Lebensmittelportion zur jeweiligen Produktionsspur bei der Gewichtsbestimmung auf der Endkontrollwaage.

Vorteilhafterweise ermöglicht das Nachverfolgen der Lebensmittelportionen, dass Informationen zwischen der Produktionsspur, beispielsweise dem Slicer oder der Durchlaufkontrollwaage, und der Endkontrollwaage portionenbezogen ausgetauscht oder übermittelt werden.

Zudem ermöglicht das Nachverfolgen der Lebensmittelportionen, eine Protokollierung von Abweichungen für statistische Auswertungen für die jeweilige Produktionsspur, insbesondere hinsichtlich Gewicht und Gewichtsabweichungen, Lage und optischen Merkmalen. Es können Hinweise an den Bediener ausgegeben werden, mit denen Abweichungen, die insbesondere ein gewisses Maß überschreiten, mitgeteilt werden. Auch kann chargenabhängig und/oder in Abhängigkeit der Betriebsphase eine Auswertung nach einer Parameter-Änderung, insbesondere des Aufschneidevorgangs, erfolgen.

Weiterhin können die Lebensmittelportionen wenigstens in Teilbereichen des Wegs von den Produktionsspuren bis einschließlich der Ausgangsspur, optional einschließlich des Verpackungsprozesses, mittels eines Sensors, insbesondere eines optischen, kapazitiven oder induktiven Sensors, überwacht werden, sodass Veränderungen an den Lebensmittelportionen festgestellt und/oder protokolliert werden können. Bei dem optischen Sensor handelt es sich insbesondere um eine Kamera, die eine entsprechende Überwachung ermöglicht, insbesondere die Erkennung und Protokollierung von Veränderungen an Lebensmittelportionen im Prozess zwischen dem Aufschneiden und der Entnahme der verpackten und gewogenen Lebensmittelportionen.

Insbesondere kann die Lage der Lebensmittelportion in der Verpackung überwacht werden, wobei bei einer Abweichung vom Soll-Zustand eine Korrektur der Lage bereits auf der Produktionsspur, oder eine Korrektur der Ablage durch einen Picker-Roboter erfolgen kann. Die Überwachung der Lage kann beispielsweise durch Laserscannen erfolgen, wobei dabei zusätzlich zur Lage auch das Volumen und Qualitätskriterien erfasst werden können.

Die ermittelte Lage wird mit Einstell- und Parametervorgaben durch den Bediener verglichen, wobei diesbezüglich Einstellhilfen vorgesehen sein können. Insbesondere kann die Lage der Lebensmittelportion mit der vorhandenen Kamera eines Picker-Roboters erfasst und dann abgeglichen werden. Ansonsten kann auch andere bereits vorhandene Sensorik eingesetzt werden.

Insbesondere kann die Portionsüberwachung auch im Bereich der Verpackungsmaschine durchgeführt werden, sodass die Lage der Lebensmittelportion in der jeweiligen Verpackung erkannt werden kann. Weiterhin ist es möglich die Vollständigkeit der Lebensmittelportion und von deren Verpackung, mit einem optischen System zu überwachen, wobei insbesondere die Scheibenanzahl des Lebensmittelproduktes, das Label der Verpackung und/oder die Bedruckung der Verpackung erfasst werden können. Das optische System umfasst einen oder mehrere optische Sensoren, insbesondere Kameras. Dabei können vorhandene Systeme oder Sensoren über die gesamte Linienlänge genutzt werden, indem diese kombiniert und in die Nachverfolgung der Lebensmittelportionen und/oder Lageüberwachung integriert werden.

In einer Ausführungsform wird bei einer erkannten Abweichung von Sollwerten bezüglich Anordnung, Außenform, Temperatur und/oder Schnittbild der Lebensmittelportion, eine angepasste Regelung des Aufschneidens, Anordnens und/oder Vorkühlens der nachfolgenden Lebensmittelportionen durchgeführt. Dadurch kann auf vielfältige Weise die Qualität, Gestalt und das Gewicht der erzeugten Lebensmittelportionen und Verpackung positiv beeinflusst werden.

Es kann eine automatische Anpassung von Lebensmittelportionen im Prozess aufgrund von erkannten Abweichungen vom Soll-Vorgaben, insbesondere bezüglich Gewicht, Geometrie, Temperatur und Aussehen der einzelnen Scheiben oder der Lebensmittelportion erfolgen. Durch das ermittelte Gewicht der spurbezogenen Waage und/oder der Endkontrollwaage wird das Gewicht der Portionen im Schneidvorgang angepasst, wobei dies jeweils spurbezogenen erfolgen kann.

Weiterhin können Hinweise, Rückmeldungen und Einstellempfehlungen an den Bediener als Vorschläge zum Einstellen der Parameter des Systems, insbesondere beim Nachjustieren, ausgegeben werden, wenn vorgebbare Grenzen überschritten werden.

Insbesondere kann die Geometrie einer Lebensmittelportion dadurch verbessert werden, dass die Ausrichtung der einzelnen Scheiben durch den Portionierer korrigiert wird. Abweichungen bezüglich Temperatur und Aussehen kann durch eine Anpassung der Vorkühlung bzw. durch Aussortieren entgegnet werden.

Die vorliegende Erfindung stellt weiterhin ein Lebensmittelverarbeitungssystem bereit, das ein Lebensmittelaufschneidesystem und eine Übergabevorrichtung umfasst, wobei das Lebensmittelaufschneidesystem ausgelegt ist, in mehreren Produktionsspuren Lebensmittelprodukte zu einzelnen Lebensmittelportionen aufzuschneiden, und die Übergabevorrichtung ausgelegt ist, die mehrspurig erzeugten Lebensmittelportionen auf eine Ausgangsspur zu übergeben. Erfindungsgemäß ist eine Steuerung vorgesehen, die eingerichtet ist, die jeweilig auf der Ausgangsspur angeordneten Lebensmittelportionen über einen Identifikationswert der jeweiligen Produktionsspur und/oder einer daran anschließenden Spur der Weiterverarbeitung zuzuordnen, auf der die Lebensmittelportion erzeugt bzw. behandelt, gehandhabt oder bearbeitet wurde.

Die Steuerung des Lebensmittelverarbeitungssystems kann durch eine separate übergeordnete Steuerung gebildet werden, oder durch die Steuerung einer der Komponenten des Lebensmittelverarbeitungssystems, insbesondere der Steuerung des Lebensmittelaufschneidesystems.

Insbesondere weist die Steuerung einen Datenspeicher auf, in dem für jede auf der Ausgangsspur angeordnete Lebensmittelportion ein Identifikationswert hinterlegt ist, der es ermöglicht die jeweilige Lebensmittelportion der Produktionsspur zuzuordnen, auf der die Lebensmittelportion erzeugt bzw. behandelt, gehandhabt oder bearbeitet wurde. Somit ist es möglich die Erzeugung, Behandlung, Handhabung oder Bearbeitung einer jeden Lebensmittelportion auf der Ausgangsspur zur Produktionsspur zurückzuverfolgen. Dies ermöglicht nicht nur eine vorteilhafte Überwachung des Systems, sondern eröffnet auch neue und vorteilhafte Möglichkeiten der Regelung des Systems. Im Datenspeicher können weitere portionsspezifische Daten abgelegt sein, beispielweise, welches Lebensmittelprodukt aufgeschnitten wurde, um die jeweilige Lebensmittelportion zu erzeugen. Dafür kann insbesondere eine Kennnummer des Lebensmittelprodukts in dem Datensatz der Lebensmittelportion hinterlegt werden, beispielsweise eine Seriennummer des Lebensmittelprodukts.

Der Datenspeicher kann in der Steuerung oder aber auch im Netzwerk, beispielsweise in einer Datencloud, vorgesehen sein.

Der Identifikationswert kann insbesondere ein Kennwert für die Produktionsspur sein, beispielsweise eine Produktionsspurkennnummer.

Alternativ kann der Identifikationswert ein Kennwert für die jeweilige Lebensmittelportion sein, beispielsweise eine Lebensmittelportionskennnummer. Insbesondere weist der Datenspeicher der Steuerung eine relationale Datenbank auf, in der für jede Lebensmittelportion ein Datensatz vorgehalten wird, wobei der Identifikationswert der (eindeutige) Schlüssel des Datensatzes ist, und die weiteren Eigenschaften der Lebensmittelportion, insbesondere die Produktionsspur, als Attributwerte hinterlegt werden. Die Datensätze aus wenigstens dem Identifikationswert und ggf. mehreren Attributwerten können archiviert werden oder jeweils nur in dem Datenspeicher für den Zeitraum zwischen der Erstellung der Lebensmittelportion und ihrer Endkontrolle vorgehalten werden.

Erfindungsgemäß ist in der Steuerung bekannt, welche Lebensmittelportion durch welche Produktionsspur erzeugt wurde, und es können diesbezügliche Auswertungen erfolgen. Die statistischen Größen können insbesondere auf einer Anzeige des Lebensmittelverarbeitungssystems angezeigt werden, um dem Bediener einen Überblick über die Funktion der Produktionsspuren zu geben.

Die Lebensmittelportion kann über den Identifikationswert auch einer an die Produktionsspuren anschließenden Spur der Weiterverarbeitung zugeordnet werden. Dazu wird diese Information entsprechend im Datenspeicher der Steuerung hinterlegt.

Insbesondere ist eine Endkontrollwaage vorgesehen, die ausgelegt ist, das Gewicht der einzelnen Lebensmittelportionen auf der Ausgangsspur zu erfassen. Die Steuerung ist vorteilhafterweise ausgelegt, das erfasste Gewicht über den Identifikationswert der jeweiligen Produktionsspur zuzuordnen. Insbesondere ist die Endkontrollwaage in der Ausgangsspur angeordnet. Durch die Zuordnung der Lebensmittelportionen zu den Produktionsspuren, ermöglicht die Endkontrollwaage die Bestimmung des Mittelwerts des Portionsgewichts einer bestimmten Losgröße von Lebensmittelportionen einer Produktionsspur.

Vorteilhafterweise ist die Steuerung ausgelegt, den Aufschneidevorgang der mehreren Produktionsspuren in Abhängigkeit des Gewichts der der jeweiligen Produktionsspur von der Steuerung zugeordneten Lebensmittelportionen separat zu regeln, und zwar insbesondere jeweils in Abhängigkeit des auf der Endkontrollwaage bestimmten Gewichts der Lebensmittelportionen. Das heißt, obwohl das Gewicht der Lebensmittelportionen auf einer gemeinsamen Ausgangsspur erfasst wird, kann durch die Zuordnung der Lebensmittelportionen zu den Produktionsspuren eine spurbezogene Regelung erfolgen.

Insbesondere können wenigstens bereichsweise gemeinsame Förderbänder oder Förderriemen zum mehrspurigen Fördern der Lebensmittelportionen vorgesehen. Vorteilhafterweise sind aber wenigstens bereichsweise jeweils separat ansteuerbare Fördermittel für jede Produktionsspur vorgesehen.

Dies ermöglicht eine Ausrichtung der Lebensmittelportionen auf den Produktionsspuren zueinander, sodass sie gemäß den Anforderungen eines Formatsatzes einer Verpackungsmaschine angeordnet werden können. Weiterhin hat dies auch den Vorteil, dass die Produktion der einzelnen Produktionsspuren je nach Randbedingungen, beispielsweise bei Produktwechseln im Lebensmittelaufschneidesystem, angepasst werden kann.

In einer Ausführungsform ist ein mehrspuriger Magnetlinearförderer mit einzeln ansteuerbaren Transportmovern zum mehrspurigen Fördern der Lebensmittelportionen vorgesehen. Auf jedem Transportmover ist dabei wenigstens eine Lebensmittelportion angeordnet, sodass die wenigstens eine Lebensmittelportion jeweils unabhängig gefördert werden kann. Damit wird eine hohe Flexibilität des Transports der Lebensmittelportionen erreicht.

Vorteilhafterweise ist ein Portionsträger für die Lebensmittelportionen vorgesehen, der ein Identifikationsmittel umfasst. Das Identifikationsmittel kann beispielsweise eine Nummer, ein Schriftzeichen, ein Barcode oder ein RFID-Chip sein.

Aus dem Identifikationsmittel kann beispielweise direkt die Produktionsspur der betreffenden Lebensmittelportion auslesbar sein. Dafür können die Portionsträger einer Produktionsspur jeweils das gleiche Identifikationsmittel aufweisen.

Alternativ kann aus dem Identifikationsmittel eine Kennnummer für die betreffenden Lebensmittelportion auslesbar sein, und zwar entweder ein eindeutiger Schlüssel für die Lebensmittelportion oder ein Kennwert für den Portionsträger, der im Datenspeicher der Steuerung als Attributwert mit dem Identifikationswert verknüpft ist.

Der Portionsträger ist insbesondere auf dem Fördermittel angeordnet, beispielsweise auf einem Förderband, Förderriemen oder auf einem Transportmover. Beispielsweise kann ein Identifizierungsmittel auf einem Zwischenlegepapier (Interleaverpapier) vorgesehen sein, das unter oder zwischen zwei Lebensmittelscheiben angeordnet wird, wie aus der WO 2016/150641 A1 bekannt.

Vorteilhafterweise ist die Steuerung ausgelegt, die Ansteuerung der Übergabevorrichtung, und gegebenenfalls von weiteren Fördersystemen, zu überwachen, um damit die Zuordnung der einzelnen Lebensmittelportionen zu den Produktionsspuren nachzuverfolgen. Die Ansteuerung der Übergabevorrichtung bestimmt, wann von welcher Produktionsspur wenigstens eine Lebensmittelportion auf die Ausgangspur übergeben wird. Folglich kann aus dieser Information bestimmt werden, von welcher Produktionsspur eine auf der Ausgangsspur angeordnete Lebensmittelportion stammt, wobei diese Information als Identifikationswert oder diesem zugeordneter Attributwert in dem Datenspeicher der Steuerung hinterlegt werden kann.

In einer Ausführungsform sind stromaufwärts der Übergabevorrichtung spurbezogene Waagen vorgesehen. Dabei handelt es sich insbesondere um Durchlaufkontrollwaagen, die jeweils das Gewicht der erzeugten Lebensmittelportionen einzeln bestimmen, und vorteilhafterweise an das Lebensmittelaufschneidesystem zurückführen, sodass eine spurbezogene Gewichtsregelung erfolgen kann. Weiterhin kann die Gewichtsinformation der spurbezogenen Waagen dazu verwendet werden, fehlgewichtige Portionen auszusortieren oder zu kennzeichnen.

Vorteilhafterweise ist das Lebensmittelsaufschneidesystem eine mehrspurige Lebensmittelaufschneidemaschine. Eine mehrspurige Lebensmittelaufschneidemaschine ist beispielsweise ein Slicer, in dem mehrere Lebensmittelprodukte parallel einem Schneidmesser zugeführt werden, wobei die Zuführgeschwindigkeit der einzelnen Lebensmittelprodukte separat gesteuert oder geregelt sein kann. Weiterhin kann als mehrspurige Lebensmittelaufschneidemaschine ein Slicer vorgesehen werden, der mehrere Messer in nur einem Maschinengestell aufweist, sodass parallel mit mehreren Messern aufgeschnitten werden kann. Jedem Messer werden zeitgleich ein oder mehrere Lebensmittelprodukte zugeführt.

In einer anderen Ausführungsform umfasst das Lebensmittelaufschneidesystem mehrere parallele einspurige oder mehrspurige Lebensmittelaufschneidemaschinen. D.h. das Lebensmittelaufschneidesystem kann durch mehrere parallel geordnete, separate Slicer gebildet werden.

In einer Ausführungsform sind zwei oder mehr Ausgangsspuren mit jeweils einer Endkontrollwaage vorgesehen. D.h. die Übergabevorrichtung übergibt die mehrspurig erzeugten Lebensmittelportionen jeweils auf eine der mehreren Ausgangsspuren, wobei wiederum jede Lebensmittelportion über einen Identifikationswert im Datenspeicher der Steuerung nachverfolgbar ist, sodass es ermöglicht wird, die jeweilige Lebensmittelportion ihrer Produktionsspur zuzuordnen.

Mehrere Ausgangsspuren haben beispielsweise den Vorteil, dass die Produkte gesondert und gegebenenfalls in unterschiedliche Verpackungen verpackt werden können. Beispielsweise können alle Produkte einer Qualitätsklasse in einer ersten Verpackungsmaschine verpackt werden, und alle Produkte einer zweiten Qualitätsklasse in einer zweiten Verpackungsmaschine, wobei die verpackten Produkte jeweils durch die jeweilige Endkontrollwaage gewichtskontrolliert werden.

In einer Ausführungsform weist die Übergabevorrichtung ein Übergangsfördermittel mit einer Leiteinrichtung auf, wobei das Übergangsfördermittel ausgelegt ist, die Lebensmittelportionen von mehreren Spuren sequenziell hintereinander in Förderrichtung auf der Ausgangspur anzuordnen. Bei der Leiteinrichtung kann es sich insbesondere um eine Führungsschräge handeln, es ist aber auch eine Führungskurve möglich.

In einer anderen Ausführungsform weist die Übergabevorrichtung eine oder mehrere Übergangsfördermittel auf, die in Querrichtung zur Förderrichtung verfahren oder verschwenkt werden können, um Lebensmittelportionen von mehreren Spuren aufzunehmen und sequenziell auf die Ausgangspur weiterzufördern. Dies kann beispielsweise durch in Querrichtung verfahrbare Fördermittel, insbesondere Förderbänder oder -riemen, erfolgen.

Vorteilhafterweise umfasst die Übergabevorrichtung einen Roboter, insbesondere einen Picker-Roboter, um Lebensmittelportionen von mehreren Spuren zu ergreifen und sequenziell auf der wenigstens einen Ausgangspur abzulegen. Insbesondere ist hierfür ein 3D-Delta-Roboter vorgesehen. Alternativ kann auch ein 2D-Delta-Roboter, oder ein Portalroboter vorgesehen sein. Beim Umsetzen der Portionen von den mehreren Spuren wird die Quer- und/oder Längsbewegung der Lebensmittelportion beim Umsetzvorgang ausgewertet, und eine Nachverfolgbarkeit über den hinterlegten Identifikationswert ermöglicht.

Weiterhin kann auch das Umsetzen der Lebensmittelportion in die Verpackung durch einen Picker-Roboter in geeignetem Datenformat pro Lebensmittelportion im Datenspeicher abgespeichert werden. Ein bereits vor dem Einlegen der Lebensmittelportion in die Verpackung hinterlegter Identifikationswert kann beibehalten werden.

Insbesondere werden die Positionskoordinaten bzw. Lagepositionen der jeweiligen Lebensmittelportionen auf den mehreren Spuren erfasst und die Umsetzung durch den Roboter in die Verpackung wird ebenfalls in Position und Lage abgespeichert und/oder ausgewertet.

Bei dem Roboter handelt es sich insbesondere um einen Mehrachsenroboter. Die mit vorangehender Ausführungsform beschriebene Querbewegung ist insbesondere bezüglich einer Formatsatzvervollständigung vorteilhaft, wobei die Nachverfolgbarkeit der Lebensmittelportion erhalten wird.

In einer Ausführungsform ist eine Nebenspur vorgesehen, auf die die Lebensmittelportionen ab einem gewissen Fehlgewicht ausgeschleust werden, wobei die Nebenspur ausgelegt ist, dass darauf Lebensmittelportionen durch Ergänzung bzw. Entnahme von Lebensmittelscheiben gewichtskorrigiert werden können. Die Information, dass eine Gewichtskorrektur durchgeführt wurde, und/oder um welchen Betrag das Gewicht der Lebensmittelportion korrigiert wurde, kann im Datensatz der jeweiligen Lebensmittelportion im Datenspeicher der Steuerung hinterlegt werden.

Das Fehlgewicht kann entweder eine Überschreitung oder eine Unterschreitung eines gewissen Grenzgewichts sein. Insbesondere ist eine Ausschleusevorrichtung nach den spurbezogenen Waagen vorgesehen. Die ausgeschleusten Lebensmittelportionen werden über ihren Identifikationswert als solche gekennzeichnet. Zusätzlich kann im Datenspeicher der Steuerung hinterlegt werden, ob eine Lebensmittelportion durch Ergänzung oder durch Entnahme gewichtskorrigiert wurde. Die ausgeschleusten Lebensmittelportionen können nach der Gewichtskorrektur wieder auf die Produktionsspuren oder direkt auf die Ausgangspur zurückgeführt werden.

Vorteilhafterweise werden im Datenspeicher der Steuerung Eigenschaften der jeweiligen Lebensmittelportion und/oder des -produktes hinterlegt, zusätzlich zu dem Identifikationswert für die Lebensmittelportion und/oder einem Identifikationswert für das Lebensmittelprodukt, aus dem die Lebensmittelportion aufgeschnitten wurde. Die Eigenschaften können unterm anderem das Gewicht, die Lage und/oder optische Merkmale der Lebensmittelportionen umfassen, die statistisch ausgewertet werden können. Dies ermöglicht eine Protokollierung im Datenspeicher der Steuerung.

In alternativen Ausführungsformen wird im Datenspeicher der Steuerung lediglich ein Identifikationswert hinterlegt, wobei in den jeweiligen lokalen Speichern der einzelnen Vorrichtungen, wie den spurbezogenen Waagen, der Endkontrollwaage, der Übergabevorrichtung, usw., Werte bezüglich dieses Identifikationswerts abgelegt werden. Diese Informationen bezüglich einer Lebensmittelportion können durch die zentrale Steuerung abgerufen werden, und sind somit systemweit verfügbar.

Die vorliegende Erfindung wird nun mit Bezug auf die in den Figuren dargestellten Ausführungsformen erläutert:
Figur 1 zeigt eine Draufsicht auf eine Ausführungsform eines erfindungsgemäßen Lebensmittelverarbeitungssystems;
Figur 2 zeigt eine Draufsicht auf eine erste alternative Ausgestaltung einer Übergabevorrichtung in einem erfindungsgemäßen Lebensmittelverarbeitungssystem;
Figur 3 zeigt eine Draufsicht auf eine zweite alternative Ausgestaltung einer Übergabevorrichtung in einem erfindungsgemäßen Lebensmittelverarbeitungssystem;
Figur 4 zeigt eine Draufsicht auf eine dritte alternative Ausgestaltung einer Übergabevorrichtung in einem erfindungsgemäßen Lebensmittelverarbeitungssystem; und
Figur 5 zeigt eine Draufsicht auf eine vierte alternative Ausgestaltung einer Übergabevorrichtung in einem erfindungsgemäßen Lebensmittelverarbeitungssystem.

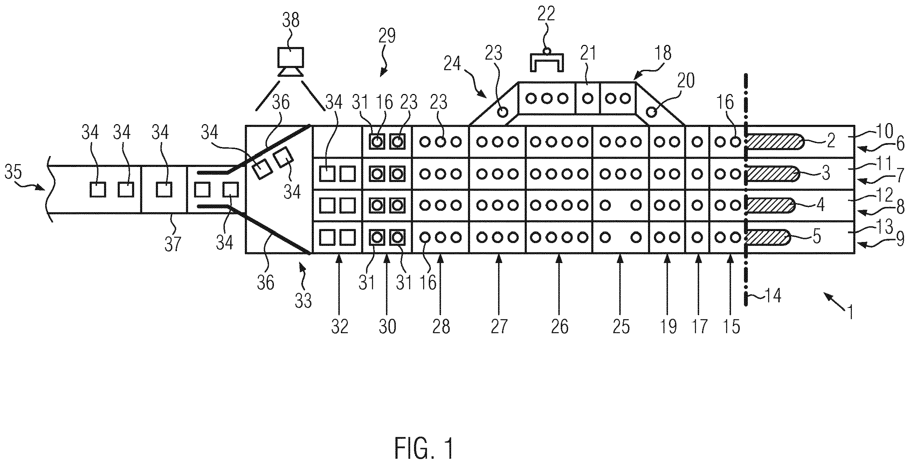

Die Ausführungsform des Lebensmittelverarbeitungssystem aus Figur 1 weist ein Lebensmittelsaufschneidesystem 1 in Form eines mehrspurigen Slicers auf, in dem mehrere Lebensmittelprodukte 2, 3, 4, 5 in parallelen Produktionsspuren 6, 7, 8, 9 aufgeschnitten werden. Dafür werden die Lebensmittelprodukte 2, 3, 4, 5 durch einzeln steuerbare Vorschubspuren 10, 11, 12, 13 einer Schneidebene 14 zugeführt, in der ein oder mehrere Messer rotieren.

Die von den Lebensmittelprodukten abgeschnittenen Lebensmittelscheiben werden auf einem Portionierer 15 abgelegt, bis sie eine gewünschte Lebensmittelportion 16 bilden. Durch Bewegung des Portionierers 15 kann die relative Anordnung der Lebensmittelscheiben zueinander in der Portion erzeugt werden, beispielsweise eine geschindelte Anordnung.

Die Lebensmittelportionen 16 werden auf der jeweiligen Produktionsspur 6, 7, 8 oder 9 zu einer spurbezogenen Waage 17, insbesondere einer Durchlaufkontrollwaage, weiter gefördert. Pro Produktionsspur 6, 7, 8, 9 ist jeweils eine spurbezogene Waage 17 vorgesehen, die jeweils das Gewicht der Lebensmittelportionen 16 in dieser Spur bestimmen kann. Die spurbezogenen Waagen 17 können gemeinsam in einem integralen Waagensystem angeordnet sein, insbesondere einer mehrspurigen Durchlaufkontrollwaage.

Das durch die spurbezogenen Waagen 17 bestimmte Gewicht der Lebensmittelportionen 16 kann im Rahmen einer Rückführungsregelung zum Lebensmittelaufschneidesystem zurückgeführt werden, und dort bei der Regelung des Aufschneidens berücksichtigt werden. Insbesondere kann bei zu geringen Gewichten der Lebensmittelportionen 16 die Scheibendicke erhöht werden, was gewöhnlicherweise durch eine Erhöhung der Vorschubgeschwindigkeit der Vorschubspuren 10, 11, 12, 13 erfolgt. Bei zu hohen Portionsgewichten kann die Scheibendicke verringert werden.

Sollten trotz dieser spurbezogenen Regelung Lebensmittelportionen erzeugt werden, die einen bestimmten Minimalwert oder Maximalwert unter- bzw. überschreiten, so werden diese auf eine Nebenspur 18 ausgeschleust. Dafür ist eine Ausschleusevorrichtung 19 vorgesehen, in der beispielsweise mittels einer Wippe, eines Förderbands in Querrichtung oder einem Picker-Roboter, Lebensmittelportionen 16 von den Produktionsspuren 6, 7, 8, 9 auf die Nebenspur 18 ausgeschleust werden können. Es ist auch möglich, dass Lebensmittelportionen ausgeschleust werden, die optischen Kriterien nicht genügen, was beispielsweise mittels eines optischen Sensors, insbesondere einer Kamera, im Bereich der Produktionsspuren festgestellt werden kann.

Die Ausschleusevorrichtung 19 wird von einer Steuerung betätigt, in der auch die Ergebnisse der spurbezogenen Waagen 17 vorliegen. In der Nebenspur 18 kann eine Korrektur der ausgeschleusten Lebensmittelportionen 20 erfolgen, insbesondere durch Nachlegen oder Entnehmen von Scheiben.

Im vorliegenden Ausführungsbeispiel weist die Nebenspur 18 eine Waage 21 auf, die einem Bediener 22 ermöglicht, das Gewicht der Lebensmittelportionen zu korrigieren. Insbesondere wird dem Bediener 22 angezeigt, wie viele Scheiben oder welches Gewicht er zugeben oder entnehmen muss.

Die gewichtskorrigierten Lebensmittelportionen 23 können dann mittels einer Einschleusevorrichtung 23, insbesondere einem Einleger, einer Wippe, eines Förderbands in Querrichtung oder einem Picker-Roboter, wieder auf die Produktionsspuren 6, 7, 8, 9 zurückgeführt werden.

Die Produktionsspuren 6, 7, 8, 9 weisen weiterhin eine Formatvervollständigungsvorrichtung 25 auf, in der Lebensmittelportionen 16 jeweils angesammelt werden, um einen Formatsatz zu vervollständigen.

Danach werden diese an einen Portionsausrichter 26 übergeben, in dem die Portionen in vorbestimmten Abständen ausgerichtet werden.

Alternativ oder zusätzlich zur Nebenspur 18, kann eine Portionsanzeige 27 vorgesehen sein, die einen Bereich bereitstellt, in dem dem Bediener angezeigt wird, wie fehlgewichtige Portionen zu korrigieren sind. Beispielweise kann dafür eine Anzeige vorgesehen sein, die in für einen Bediene identifizierbarer Form anzeigt, welche Lebensmittelportion wie ergänzt oder reduziert werden soll. Dies kann durch ein separates Display, Leuchtzeichenarrays oder durch Projektion eines Lichtsignals, direkt auf oder neben die Lebensmittelportionen 16 erfolgen.

Die Lebensmittelportionen 16 und die gewichtskorrigierten Lebensmittelportionen 23 werden gemeinsam auf einem Übergabefördermittel 28 zu einer Verpackungsmaschine 29 gefördert, insbesondere einer Tiefziehverpackungsmaschine. Dort werden die Lebensmittelportionen 16, 23 zunächst mittels eines Einlegers 30 in Verpackungsunterschalen 31 eingelegt, die dann in einer Versiegelungsvorrichtung 32 verschlossen werden.

Wie in der vorliegenden Ausführungsform gesehen werden kann, bleiben die nichtgewichtskorrigierten Lebensmittelportionen 16 jeweils in ihrer Produktionsspur. Ein Wechsel der Produktionsspuren kann lediglich durch das Ausschleusen von Lebensmittelportionen 20 erfolgen, die dann als gewichtskorrigierte Lebensmittelportion 23 wieder eingeschleust werden, gegebenenfalls auf einer anderen Produktionsspur.

Die Steuerung der Lebensmittelverarbeitungsvorrichtung ist mit den jeweiligen Steuerungen der Ausschleusevorrichtung 19 und Einschleusevorrichtung 23 verbunden und kann somit überwachen, wo eine Lebensmittelportion ausgeschleust und eingeschleust wird. Erfindungsgemäß ist in der Steuerung ein Datenspeicher vorgesehen, in dem für die Lebensmittelportion jeweils ein Identifikationswert hinterlegt ist, sodass diese identifizierbar sind. Damit ist es möglich, dass die Position der einzelnen Lebensmittelportionen nachverfolgt wird. Weiterhin kann in der Steuerung erfasst werden, welche Lebensmittelportionen ergänzt, reduziert oder anderweitig korrigiert wurden, was als Attributwert in der Steuerung zu einem Datensatz für jede Lebensmittelportion hinterlegt werden kann.

Nach der Verpackungsmaschine 29 weist die Lebensmittelverarbeitungsvorrichtung eine Übergabevorrichtung 33 auf, mit der die verpackten Lebensmittelportionen 34 auf eine Ausgangsspur 35 zusammengeführt werden. Insbesondere kann dafür eine Führungsschräge 36 vorgesehen sein. In der Ausgangsspur 35 ist eine Endkontrollwaage 37 vorgesehen, mit der jeweils die einzelnen Gewichte der verpackten Lebensmittelportionen 34 gesondert erfasst werden.

Um eine Nachverfolgbarkeit der Lebensmittelportionen 16, 23, 34 zu ermöglichen, ist ein optischer Sensor insbesondere in Form einer Kamera 38 vorgesehen, die die Bewegung der einzelnen verpackten Lebensmittelportionen 34 im Bereich der Übergabevorrichtung 33 überwacht, und ermittelt, welche verpackte Lebensmittelportion 34 von welcher Produktionsspur 6, 7, 8, 9 stammt.

Somit kann der mit der Endkontrollwaage 37 gemessene Gewichtswert jeweils einer der Produktionsspuren 6, 7, 8, 9 zugeordnet werden, oder es kann festgestellt werden, dass die verpackte Lebensmittelportion 34 auf der Endkontrollwaage 37 eine gewichtskorrigierte Lebensmittelportion 24 ist.

In diesem Ausführungsbeispiel werden die Gewichtswerte oder davon abgeleitete Größen sämtlicher, unkorrigierten Lebensmittelportionen 16 für die Regelung des Lebensmittelaufschneidesystem in der jeweiligen Produktionsspur zurückgeführt. Dies kann insbesondere dadurch geschehen, dass ein Mittelwert über eine bestimmte Losgröße von verpackten Lebensmittelprodukten 34 aus einer Produktionsspur 6, 7, 8 oder 9 gebildet wird. Liegt dieser Mittelwert über dem gewünschten Gewichtsmittelwert kann die Scheibendicke in der jeweiligen Produktionsspur des Lebensmittelaufschneidesystems 1 reduziert werden, liegt der Gewichtsmittelwert unter dem gewünschten Gewichtsmittelwert, kann die Scheibendicke erhöht werden.

Die Übergabevorrichtung 33 wird insbesondere wie folgt betrieben: Die Lebensmittelportionen 16, 23 werden gesteuert und geregelt von den einzelnen Produktionsspuren 6, 7, 8, 9 dem durch die Führungsschrägen 36 über einem Übergangsfördermittel geformten Trichter zugeführt. Dabei wird die Anzahl der Lebensmittelportionen der betreffenden Produktionsspuren 6, 7, 8, 9, genau geregelt, die der Übergabevorrichtung 33 zugeführt werden. Beispielsweise kann von der ersten Produktionsspur 6 zunächst eine vorgegebene Anzahl von Lebensmittelportionen der Übergabevorrichtung 33 zugeführt werden. Die Anzahl der übergebenen Lebensmittelportionen entspricht der bevorzugten Anzahl der Lebensmittelportionen eines Formatsatzes der Verpackungsmaschine 29.

In der Folge werden nacheinander die Lebensmittelportionen der weiteren Produktionsspuren 7, 8, 9 des Formatsatzes an die Übergabevorrichtung 33 übergeben. Die Übergabevorrichtung 33 weist ein Übergangsfördermittel in Form eines Förderbandes auf, das wenigstens so breit ist wie alle nebeneinander angeordneten Produktionsspuren 6, 7, 8, 9. Über dem Übergangsfördermittel sind auf beiden Seiten Führungsschrägen 36 vorgesehen sind, sodass sich der Förderbereich hin zu der Ausgangsspur 35 verjüngt. Somit werden alle Lebensmittelportionen 34 auf eine einzige Ausgangsspur 35 geleitet.

Die Ausgangspur 35 wird durch ein einspuriges Förderband gebildet, das die verpackten Lebensmittelportionen der Endkontrollwaage 37 zuführt. Diese ermittelt die einzelnen Gewichte der Lebensmittelportionen mitsamt der Verpackung und möglichen Interleaver-Folien oder Unterlagen, insbesondere L-Boards.

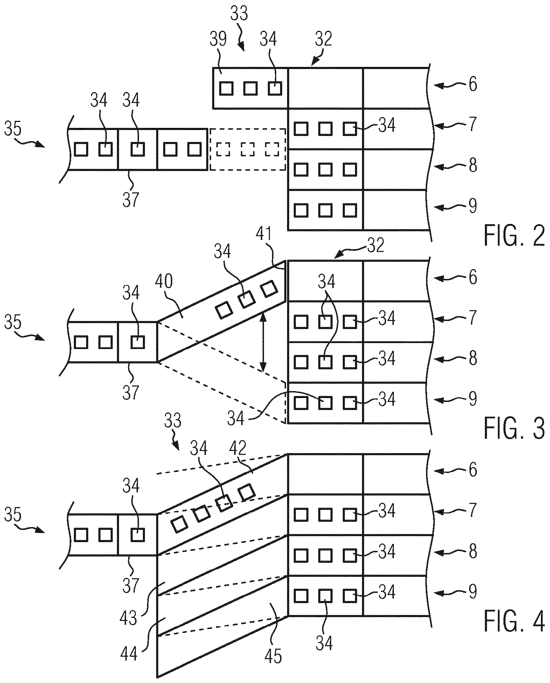

In der Ausführungsform gemäß Figur 2 ist die Übergabevorrichtung 33 als einspuriges, parallelverschiebbares Übergangsfördermittel 39 ausgestaltet, das quer zur Förderrichtung der Produktionsspuren 6, 7, 8, 9 verschoben werden kann. Wie in Figur 2 dargestellt, wird das Übergangsfördermittel 39 zunächst mit ersten Produktionsspur 6 ausgerichtet. Dann werden die verpackten Lebensmittelprodukte 34 eines Formatsatzes darauf angeordnet. Daraufhin wird das Übergangsfördermittel 39 in Querrichtung bewegt, bis es mit der Ausgangsspur 35 ausgerichtet ist, wie in Strichlinien dargestellt ist. Dann werden die verpackten Lebensmittelportionen 34 von dem Übergangsfördermittel 39 auf die Ausgangsspur 35 übergeben und dort einzeln von der Endkontrollwaage 37 auf ihr Gewicht überprüft. Dieser Vorgang wird dann auch ausgehend von den anderen Produktionsspuren 7, 8, 9 ausgeführt, sodass alle verpackten Lebensmittelportionen 34 auf der Ausgangsspur 35 zusammengeführt werden. Das Übergangsfördermittel 39 ist insbesondere ein Förderband.

Die Steuerung der Übergabevorrichtung 33 ist mit der Steuerung des Lebensmittelverarbeitungssystems verbunden, sodass bestimmt werden kann, welche Lebensmittelportionen 34 von welcher Produktionsspur 6, 7, 8, 9 auf die Ausgangsspur 35 übergeben werden.

Alternativ kann aber auch ein parallelverschiebbares Übergangsfördermittel mit mehreren Spuren eingesetzt werden. Dies ermöglicht insbesondere, dass auf einer Spur des Übergangsfördermittels Lebensmittelportionen von einer der Produktionsspuren 6, 7, 8, 9 aufgenommen werden, während zeitgleich von einer anderen Spur des Übergangsfördermittels Lebensmittelportionen auf die Ausgangspur 35 abgegeben werden. Alternativ können auf mehreren Spuren des Übergangsfördermittels Lebensmittelportionen zeitgleich von mehreren Produktionsspuren 6, 7, 8, 9 aufgenommen und dann auf die Ausgangsspur 35 abgegeben werden .

In diesem Zusammenhang ist es auch möglich, dass mehrere Ausgangsspuren, jeweils mit einer Endkontrollwaage, vorgesehen sind.

In Figur 3 wird eine weitere Ausgestaltung einer Übergabevorrichtung 33 dargestellt. Die Übergabevorrichtung 33 umfasst ein Übergangsfördermittel 40, das nur auf der stromaufwärtigen Eingangsseite verschiebbar ist, während die stromabwärtige Seite durchgehend an die Ausgangsspur 35 angrenzt. Durch Querverschiebung der Eingangsseite 41, d.h. durch Verschwenken des Übergangsfördermittels 40, können die verpackten Lebensmittelportionen 34 von sämtlichen Produktionsspuren 6, 7, 8, 9 aufgenommen werden und auf der Ausgangsspur 35 zusammengeführt werden. Wiederum ist es möglich, durch Auswertung der Steuerung und/oder Überwachung der Übergabevorrichtung 33 zu bestimmen, von welchen Produktionsspuren 6, 7, 8, 9 die jeweiligen Lebensmittelportionen 34 stammen. Im Betrieb werden wiederum ganze Formatsätze von Lebensmittelportion jeweils sequenziell von den Produktionsspuren 6, 7, 8, 9 auf die Ausgangsspur 35 überführt.

Insbesondere ist das Übergangsfördermittel 40 als ein einspuriges, auf der Eingangsseite querverschiebbares Förderband ausgestaltet. Dafür kann insbesondere eine Elastizität des Förderbandes oder eine Längenausgleichsvorrichtung vorgesehen werden kann, die ermöglicht dass das Förderband auch bei den äußeren Produktionsspuren 6, 7, 8, 9 direkt an die Produktionsspuren 6, 7, 8, 9 angrenzt. Alternativ können die Produktionsspuren im äußeren Bereich etwas länger gestaltet sodass sie direkt an das Übergangsfördermittel 40 angrenzen. In anderen Ausführungsformen sind die Übergangsfördermittel bereichsweise unter den Produktionsspuren 6, 7, 8, 9 angeordnet.

In Figur 4 ist eine weitere Ausgestaltung der Übergabevorrichtung 33 dargestellt, in der stromabwärts zu jeder Produktionsspur 6, 7, 8, 9 ein Übergangsfördermittel 42, 43, 44, 45 vorgesehen ist. Die Übergangsfördermittel 42, 43, 44, 45 sind jeweils zumindest auf ihrer stromabwärtigen Seite querverschiebbar oder verschwenkbar, sodass jeweils eines der Übergangsfördermittel 42, 43, 44, 45 mit der Ausgangsspur 35 ausgerichtet werden kann. Dann werden jeweils die auf diesem Übergangsfördermittel angeordneten, verpackten Lebensmittelportionen 34 auf die Ausgangsspur 35 weiter gefördert.

Insbesondere kann anstelle der Verschwenkbarkeit eine Querverschiebbarkeit vorgesehen sein. Somit ist es möglich, dass mehrere parallele Übergangsfördermittel in Form von Übergangsförderbändern quer verschiebbar sind, so dass die fördernden Spuren jeweils direkt der Ausgangsspur 35 gegenübergestellt werden und die verpackten Lebensmittelportionen zur Endkontrollwaage 37 transportiert werden können.

In sämtlichen Ausführungsformen kann jeweils die Steuerung der Übergabevorrichtung 33 überwacht werden, damit bestimmt werden kann, welche Lebensmittelportionen von welchen Produktionsspuren 6, 7, 8, 9 auf die Ausgangspur 35 verlagert wurden, sodass bei der Gewichtsüberprüfung mit der Endkontrollwaage 37 der Gewichtswert jeweils einer Produktionsspur 6, 7, 8, 9 zugeordnet werden kann, sofern die Portion nicht gewichtskorrigiert ist.

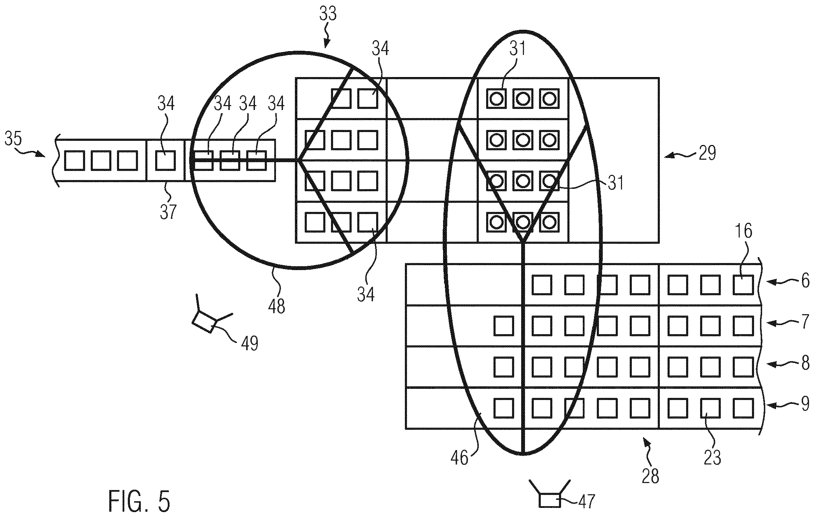

In Figur 5 wird eine weitere Ausgestaltung der Verpackungsmaschine 29 und der Übergabevorrichtung 33 in einem Ausführungsbeispiel einer erfindungsgemäßen Lebensmittelverarbeitungsvorrichtung dargestellt. Die Lebensmittelportionen 16 und gewichtskorrigierten Lebensmittelportion 23 werden jeweils auf einem Übergangsfördermittel 28 zu einem ersten Picker-Roboter 46 gefördert, der die Lebensmittelportionen 16, 23 ergreift und zu der Verpackungsmaschine 29 querverlagert und dort in Verpackungsunterschale einlegt. Die Anzahl der Spuren in der Lebensmittelverpackungsvorrichtung kann sich von der Anzahl der Produktionsspuren 6, 7, 8, 9 unterscheiden.

Die Bewegungen der einzelnen Lebensmittelportionen 16, 23 kann dabei entweder aufgrund der Steuerung des Picker-Roboters 46 und/oder mittels einer Kamera 47 nachvollzogen werden. Das von der Kamera 47 erfasste Bild ermöglicht mittels Bildverarbeitungssoftware ein Tracking der Lebensmittelportion 16, 23.

Bei der Verpackungsmaschine 29 handelt es sich insbesondere um eine Tiefziehverpackungsmaschine, in der die Verpackungsunterschalen 31 durch Versiegeln mit einer Folie verschlossen werden.

Die verpackten Lebensmittelportionen 34 werden dann auf mehreren Spuren der Verpackungsmaschine 29 weiter gefördert, und mittels eines zweiten Picker-Roboters 48 ergriffen und auf die Ausgangsspur 35 verlagert, wo sie einzelnen mittels einer Endkontrollwaage 37 gewogen werden. Dabei wird die Steuerung des zweiten Picker-Roboters 48 überwacht. Durch eine Zusammenführung der Informationen des Verlagerungsvorgangs des ersten Picker-Roboters 46 und des Verlagerungsvorgangs des zweiten Picker-Roboters 48 kann dann nachvollzogen werden, von welcher Produktionsspur 6, 7, 8, 9 eine jeweilige verpackte Lebensmittelportion 34 stammt. Auf Basis des mit der Endkontrollwaage 37 ermittelten Gewichtswerts, kann die Regelung dieser Produktionsspur gezielt angepasst werden kann. Auch für den Verlagerungsvorgangs des zweiten Picker-Roboters 48 kann alternativ oder ergänzend eine Kamera 49 vorgesehen sein, wobei mittels Bildverarbeitung und Tracking die Position der einzelnen verpackten Lebensmittelportionen 34 nachverfolgt wird.

## Patentansprüche

1. Verfahren zum Verarbeiten von Lebensmittelprodukten, umfassend die Schritte:
a) mehrspuriges Aufschneiden von Lebensmittelprodukten zu einzelnen Lebensmittelportionen (16, 20) in mehreren Produktionsspuren,
b) Erfassen von mindestens einem Merkmal einer Lebensmittelportion (16, 20, 23, 34) während und/oder nach dem Aufschneiden,
c) mehrspuriges Fördern der Lebensmittelportionen (16, 23, 34) auf separaten Produktionspuren (6, 7, 8, 9),
d) Verlagern der Lebensmittelportionen (34) von mehreren Produktionsspuren (6, 7, 8, 9) auf eine reduzierte Anzahl von Ausgangsspuren (35),
**gekennzeichnet durch**
Nachverfolgen der Position der einzelnen Lebensmittelportionen (16, 23) mittels einer Steuerung, sodass für jede auf die Ausgangsspur (35) verlagerte Lebensmittelportion (16) bekannt ist, in welcher Produktionsspur (6, 7, 8, 9) sie erzeugt wurde.

2. Verfahren nach Anspruch 1, weiterhin umfassend die Überwachung der einzelnen Lebensmittelportionen (16, 20, 23, 34) mittels Überwachungsmitteln, sodass für jede auf die Ausgangsspur (35) verlagerte Lebensmittelportion (34) bekannt ist, welche Merkmale die Lebensmittelportion besitzt und/oder welche Veränderungen an der Lebensmittelportion vorgenommen wurden.

3. Verfahren nach Anspruch 1 oder 2, umfassend den weiteren Schritt:
e) Messen des Gewichts der einzelnen Lebensmittelportionen (34) auf der Ausgangsspur (35) mit einer Endkontrollwaage (37), und Zuordnen des auf der Endkontrollwaage (37) gemessenen Gewichts zu der jeweiligen Produktionsspur (6, 7, 8, 9), auf der die jeweilige Lebensmittelportion (34) aufgeschnitten wurde.

4. Verfahren nach Anspruch 3, wobei eine separate Regelung des Aufschneidens in den Produktionsspuren (6, 7, 8, 9) erfolgt, insbesondere durch Anpassen der Scheibendicke oder der Scheibenanzahl beim Aufschneiden, auf Basis des gemessenen Gewichts der Lebensmittelportionen (34) der jeweiligen Produktionsspuren oder davon abgeleiteten Größen.

5. Verfahren nach einem der vorangehenden Ansprüche, wobei die Lebensmittelportionen (16) im Rahmen von Schritt c) mit jeweils spurbezogenen Waagen (17) gewogen werden, wobei optional der mit der spurbezogenen Waage (17) ermittelte Gewichtswert einer Lebensmittelportion (16) mit dem Gewichtswert derselben Lebensmittelportion (16) auf der Endkontrollwaage (37) verglichen werden kann.

6. Verfahren nach einem der vorangehenden Ansprüche, wobei die Veränderung von fehlgewichtigen Lebensmittelportion (20) bei deren Gewichtskorrektur sensorisch erfasst wird, insbesondere durch Vergleich des mit einer spurbezogenen Waage (17) und mit einer Endkontrollwaage (37) erfassten Gewichts der Lebensmittelportion vor und nach der Gewichtskorrektur.

7. Verfahren nach einem der vorangehenden Ansprüche, umfassend die Überwachung und Speicherung der Portionsverlagerung von einem ein- oder mehrspurigen Zuführband mit Übergabe-Bändern oder Robotern auf oder in eine offenen Verpackungsschale (31).

8. Verfahren nach einem der vorangehenden Ansprüche, wobei bei erkannten Abweichungen von Sollwerten bezüglich Anordnung, Außenform, Temperatur und/oder Schnittbild der Lebensmittelportionen (16, 23), eine angepasste Regelung des Aufschneidens, Anordnens und/oder Vorkühlens der nachfolgenden Lebensmittelportionen (16, 23) erfolgt.

9. Lebensmittelverarbeitungssystem, umfassend
ein Lebensmittelaufschneidesystem (1), das ausgelegt ist, in mehreren Produktionsspuren (6, 7, 8, 9) Lebensmittelprodukte zu einzelnen Lebensmittelportionen (16, 20) aufzuschneiden, und
eine Übergabevorrichtung (33), die ausgelegt ist, die mehrspurig erzeugten Lebensmittelportionen (34) auf eine Ausgangsspur (35) zu übergeben,
**gekennzeichnet durch**
eine Steuerung, die eingerichtet ist, die jeweilig auf der Ausgangsspur angeordneten Lebensmittelportionen (34) über jeweils einen Identifikationswert der jeweiligen Produktionsspur (6, 7, 8, 9) zuzuordnen, auf der die Lebensmittelportion (34) erzeugt bzw. behandelt, gehandhabt oder bearbeitet wurde.

10. Lebensmittelverarbeitungssystem nach Anspruch 9, wobei eine Endkontrollwaage (37) vorgesehen ist, die ausgelegt ist, das Gewicht der einzelnen Lebensmittelportionen (34) auf der Ausgangsspur (35) zu erfassen, und die Steuerung ausgelegt ist, das erfasste Gewicht über den Identifikationswert der jeweiligen Produktionsspur (6, 7, 8, 9) zuzuordnen.

11. Lebensmittelverarbeitungssystem nach Anspruch 9 oder 10, wobei die Steuerung ausgelegt ist, die Ansteuerung der Übergabevorrichtung (33), und ggf. von weiteren Fördersystemen, zu überwachen, um damit die Zuordnung der einzelnen Lebensmittelportionen (16, 20, 23, 34) zu den Produktionsspuren (6, 7, 8, 9) nachzuverfolgen.

12. Lebensmittelverarbeitungssystem nach einem der Ansprüche 9 bis 11, wobei stromaufwärts der Übergabevorrichtung (33) spurbezogene Waagen (17) vorgesehen sind.

13. Lebensmittelverarbeitungssystem nach einem der Ansprüche 9 bis 12, wobei das Lebensmittelsaufschneidesystem (1) mehrere parallele einspurige oder mehrspurige Lebensmittelauschneidemaschinen umfasst.

14. Lebensmittelverarbeitungssystem nach einem der Ansprüche 9 bis 13, wobei zwei oder mehr Ausgangsspuren (35) mit jeweils einer Endkontrollwaage (37) vorgesehen sind.

15. Lebensmittelverarbeitungssystem nach einem der Ansprüche 9 bis 14, wobei in einem Datenspeicher der Steuerung, zusätzlich zu dem Identifikationswert für die Lebensmittelportion (16, 20, 23), Eigenschaften der Lebensmittelportion (16, 20, 23) hinterlegt werden, insbesondere bezüglich Gewicht, Lage und/oder optischen Merkmalen, die statistisch ausgewertet werden können.

## Claims

1. A method for processing food products, comprising the following steps:
a) multi-track slicing of food products into individual food portions (16, 20) on a plurality of production tracks,
b) detecting at least one feature of a food portion (16, 20, 23, 34) during and/or after slicing,
c) multi-track conveying of the food portions (16, 23, 34) on separate production tracks (6, 7, 8, 9),
d) moving the food portions (34) from a plurality of production tracks (6, 7, 8, 9) onto a reduced number of output tracks (35),
**characterized by**
tracking the position of the individual food portions (16, 23) by means of a controller, so that, for each food portion (16) which has been moved onto the output track (35), it is known on which production track (6, 7, 8, 9) said food portion (16) has been produced.

2. The method according to claim 1, further comprising monitoring of the individual food portions (16, 20, 23, 34) by means of monitoring units, so that, for each food portion (34) which has been moved onto the output track (35), it will be known which features the food portion has and/or which changes the food portion has undergone.

3. The method according to claim 1 or 2, comprising the further step of e) measuring the weight of the individual food portions (34) on the output track (35) with an end-of-line scale (37), and assigning the weight measured on the end-of-line scale (37) to the respective production track (6, 7, 8, 9) on which the food portion (34) in question has been sliced.

4. The method according to claim 3, wherein slicing on the production tracks (6, 7, 8, 9) is separately feedback controlled, in particular by adapting, based on the measured weight of the food portions (34) of the respective production tracks or based on values derived therefrom, the slice thickness or the number of slices during slicing.

5. The method according to one of the preceding claims, wherein the food portions (16) are weighed during step c) with respective track-related scales (17), wherein the weight value of a food portion (16) detected by the track-related scale (17) may optionally be compared with the weight value of the same food portion (16) on the end-of-line scale (37).

6. The method according to one of the preceding claims, wherein the change of the erroneous-weight food portion (20) during weight correction is detected by sensors, in particular by a comparison between the weight determined with a track-related scale (17) and the weight determined with an end-of-line scale (37) before and after the weight correction.

7. The method according to one of the preceding claims, comprising monitoring and storing the moving of the portions from a single-track or multi-track feed belt with transfer belts or robots onto or into an open packaging tray (31).

8. The method according to one of the preceding claims, wherein, in the case of detected deviations from target values concerning the arrangement, the external shape, the temperature and/or the slicing pattern of the food portions (16, 23), an adapted feedback control of the slicing, arranging and/or precooling of the subsequent food portions (16, 23) will take place.

9. A food processing system, comprising
a food slicing system (1) configured to slice on a plurality of production tracks (6, 7, 8, 9) food products so as to form individual food portions (16, 20), and
a transfer apparatus (33) configured to transfer the food portions (34) produced on a plurality of tracks to an output track (35),
**characterized by**
a controller, which is configured to assign, via a respective identification value, the respective food portions (34) arranged on the output track to the respective production track (6, 7, 8, 9) on which the food portion (34) has been produced and/or treated, handled or processed.

10. The food processing system according to claim 9, wherein an end-of-line scale (37) is provided, which is configured to determine the weight of the individual food portions (34) on the output track (35), and wherein the controller is configured to assign the determined weight via the identification value to the respective production track (6, 7, 8, 9).

11. The food processing system according to claim 9 or 10, wherein the controller is configured to monitor the control of the transfer apparatus (33) and, possibly, of further conveying systems, so as to track in this way the assigning of the individual food portions (16, 20, 23, 34) to the production tracks (6, 7, 8, 9).

12. The food processing system according to one of the claims 9 to 11, wherein, upstream of the transfer apparatus (33), track-related scales (17) are provided.

13. The food processing system according to one of the claims 9 to 12, wherein the food slicing system (1) comprises a plurality of parallel single-track or multi-track food slicing machines.

14. The food processing system according to one of the claims 9 to 13, wherein two or more output tracks (35) are each provided with an end-of-line scale (37).

15. The food processing system according to one of the claims 9 to 14, wherein a data memory of the controller has stored therein, in addition to the identification value for the food portion (16, 20, 23), characteristics of the food portion (16, 20, 23), in particular as regards weight, position and/or optical features, which may be evaluated statistically.

## Revendications

1. Procédé de transformation de produits alimentaires, comprenant les étapes suivantes :
a) découpage sur plusieurs lignes de produits alimentaires en portions d'aliment individuelles (16, 20) dans plusieurs lignes de production,
b) mesure d'au moins une caractéristique d'une portion d'aliment (16, 20, 23, 34) pendant et/ou après le découpage,
c) convoyage à plusieurs lignes des portions d'aliment (16, 23, 34) sur des lignes de production séparées (6, 7, 8, 9),
d) déplacement des portions d'aliment (34) de plusieurs lignes de production (6, 7, 8, 9) vers un nombre réduit de lignes de sortie (35),
**caractérisé par**
le suivi de la position des portions d'aliment individuelles (16, 23) au moyen d'un contrôleur de sorte que, pour chaque portion d'aliment (16) déplacée sur la ligne de sortie (35), on sache dans quelle ligne de production (6, 7, 8 , 9) elle a été produite.

2. Procédé selon la revendication 1, comprenant en outre la surveillance des portions d'aliment individuelles (16, 20, 23, 34) au moyen de moyens de surveillance de sorte que, pour chaque portion d'aliment (34) déplacée sur la ligne de sortie (35), on sache quelle caractéristique possède la portion d'aliment et/ou quelles modifications ont été apportées à la portion d'aliment.

3. Procédé selon la revendication 1 ou 2, comprenant l'étape supplémentaire suivante :
e) mesure du poids des portions d'aliment individuelles (34) sur la ligne de sortie (35) à l'aide d'une balance de contrôle final (37), et attribution du poids mesuré sur la balance de contrôle final (37) à la ligne de production respective (6, 7, 8, 9) dans laquelle la portion d'aliment respective (34) a été découpée.

4. Procédé selon la revendication 3, dans lequel a lieu une régulation séparée du découpage sur les lignes de production (6, 7, 8, 9), en particulier en ajustant l'épaisseur des tranches ou le nombre des tranches lors du découpage, sur la base du poids mesuré des portions d'aliment (34) sur les lignes de production respectives ou de grandeurs qui en dérivent.

5. Procédé selon l'une des revendications précédentes, dans lequel les portions d'aliment (16) sont pesées à l'étape c) avec des balances respectives associées à une ligne (17), dans lequel la valeur du poids d'une portion d'aliment (16) déterminée à l'aide de la balance associée à une ligne (17) peut optionnellement être comparée à la valeur du poids de la même portion d'aliment (16) sur la balance de contrôle final (37).

6. Procédé selon l'une des revendications précédentes, dans lequel la modification d'une portion d'aliment (20) dont le poids est incorrect est mesurée par un capteur lors de la correction de poids correspondante, en particulier par comparaison du poids de la portion d'aliment mesuré avec une balance associée à une ligne (17) et avec une balance de contrôle final (37) avant et après la correction de poids.

7. Procédé selon l'une des revendications précédentes, comprenant la surveillance et l'enregistrement du déplacement des portions depuis une bande de convoyage à une ou plusieurs lignes avec des bandes de transfert ou des robots sur ou dans un plateau d'emballage ouvert (31).

8. Procédé selon l'une des revendications précédentes dans lequel, si des écarts par rapport aux valeurs cible sont détectés concernant l'agencement, la forme extérieure, la température et/ou la section transversale des portions d'aliment (16, 23), une régulation adaptée du découpage, de l'agencement et/ou du pré-refroidissement des portions d'aliment suivantes (16, 23) est appliquée.

9. Système de traitement d'aliments, comprenant
un système de découpage d'aliments (1) qui est conçu pour découper des produits alimentaires en portions d'aliment individuelles (16, 20) sur plusieurs lignes de production (6, 7, 8, 9), et
un dispositif de transfert (33) qui est conçu pour transférer les portions d'aliment (34) produites sur plusieurs lignes vers une ligne de sortie (35),
**caractérisé par**
un contrôleur qui est configuré pour attribuer les portions d'aliment (34) respectives disposées sur la ligne de sortie, via une valeur d'identification respective, à la ligne de production respective (6, 7, 8, 9) sur laquelle la portion d'aliment (34) a été produite, traitée, manipulée ou transformée.

10. Système de traitement d'aliments selon la revendication 9, dans lequel une balance de contrôle final (37) est pourvue, qui est conçue pour mesurer le poids des portions d'aliment individuelles (34) sur la ligne de sortie (35), et le contrôleur est conçu pour associer le poids mesuré à la valeur d'identification de la ligne de production respective (6, 7, 8, 9).

11. Système de traitement d'aliments selon la revendication 9 ou 10, dans lequel le contrôleur est conçu pour surveiller la commande du dispositif de transfert (33), et si nécessaire d'autres systèmes de convoyage, pour suivre ainsi l'attribution des portions d'aliment individuelles (16, 20, 23, 34) aux lignes de production (6, 7, 8, 9).

12. Système de traitement d'aliments selon l'une des revendications 9 à 11, dans lequel des balances (17) associées à une ligne sont pourvues en amont du dispositif de transfert (33).

13. Système de traitement d'aliments selon l'une des revendications 9 à 12, dans lequel le système de découpage d'aliments (1) comporte plusieurs machines à découper des aliments parallèles, à une ou plusieurs lignes.

14. Système de traitement d'aliments selon l'une des revendications 9 à 13, dans lequel deux ou plusieurs lignes de sortie (35) sont pourvues, avec chacune une balance de contrôle final (37).

15. Système de traitement d'aliments selon l'une des revendications 9 à 14 dans lequel, dans une mémoire de données du contrôleur, outre la valeur d'identification de la portion d'aliment (16, 20, 23), des propriétés de la portion d'aliment (16, 20, 23) sont stockées, en particulier concernant le poids, la position et/ou les caractéristiques optiques, qui peuvent être évaluées statistiquement.
